Europäisches Patentamt

(19) **European Patent Office**

**Office européen des brevets**

(11) Publication number: **0 000 394**

**B1**

(12) **EUROPEAN PATENT SPECIFICATION**

(21) Application number: **78100362.9**

(22) Date of filing: **11.07.78**

(51) Int. Cl.³: **G 03 B 27/62**

(54) Gravity-impelled transport apparatus for aligning an original in a printing station.

(30) Priority: **12.07.77 DE 2731324**
**03.04.78 US 892611**

(43) Date of publication of application:
**24.01.79 Bulletin 79/2**

(45) Publication of the grant of the European patent:
**11.02.81 Bulletin 81/6**

(84) Designated Contracting States:
**CH DE FR GB**

(56) References cited:
**DE B 1 116 601**
**GB A 1 131 734**
**US A 2 868 115**
**US A 3 714 396**
**US A 3 865 486**

(73) Proprietor: **EASTMAN KODAK COMPANY**
**343 State Street**
**Rochester, New York 14650 (US)**

(84) Designated Contracting States:
**CH FR GB**

(73) Proprietor: **KODAK AKTIENGESELLSCHAFT**
**Postfach 369**
**D-7000 Stuttgart-Wangen 60 (DE)**

(84) Designated Contracting States:
**DE**

(72) Inventor: **Jaskowsky, Jörg**
**Hummelbergstrasse 22**
**D-7302 Ostfildern 1 (DE)**

(72) Inventor: **Bloemendaal, John F.**
**82 Quentin Road**
**Rochester New York (US)**

(72) Inventor: **Boone, Arthur M.**
**67 Harbor Drive**
**Pittsford New York (US)**

(74) Representative: **Blickle, K. Werner, Dipl.-Ing. et al,**
**KODAK AKTIENGESELLSCHAFT Postfach 369**
**D-7000 Stuttgart 60 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# Gravity-impelled transport apparatus for aligning an original in a printing station

## Background of the Invention

### Field of the Invention

This invention relates in general to photographic printers and copiers intended for exposing light sensitive material to an original and making a photographic duplicate, in particular it relates to a gravity-impelled apparatus for aligning an original in a printing station.

### Description of the Prior Art

Inasmuch as the invention has particular utility in the field of photographic printers, the invention will be discussed relative to such use. However, the need to discuss the invention in terms of particular apparatus does not diminish its importance in the area of sheet transport generally. The disclosure of use of the invention in photographic printing also illustrates the advantages of gravity-impelled transport generally.

The problem of transporting and then orienting original material in a photographic printer has been resolved by two solutions. One way is for the original material — such as photographic negatives — to be joined together in lengthy strips which are advanced through the printer for individual exposure with varying degrees of operator assistance. Another solution, when printing odd-sized originals not capable of convenient joining calls for the printer operator to manually position each piece of original material before making an exposure. The latter solution is less desirable for its related impact on productivity and labor costs.

With the introduction of copy materials adapted for direct exposure to the customer print — rather than to the photographic negative — photo processors and printers are required to handle a large number of single prints for duplication. Often single customer prints are the only practical originals, e.g., prints developed from instant processing film packages since a negative is not recoverable for purposes of duplication. Furthermore, joining single pieces of original material into lengthy strips for automated printing would be time consuming and expensive and involves the risk of damaging the original print. Unlike negatives, original prints are not only returned to their owner but are subject to the more critical scrutiny deserving a finished product since the originals themselves are images suitable for viewing, mounting, framing, etc. Therefore, the need exists for a simple transport apparatus which will efficiently handle large volumes of single originals carefully and inexpensively, while also accurately and repeatedly positioning each original in a printing station for exposure to light sensitive photographic material.

Registration of an original in the printing station of a photographic printer must be precisely controlled if the duplicate image is to be properly positioned and framed relative to the edges of the light-sensitive copy paper. Since the copy paper is typically provided in roll form and automatically unwound and positioned frame-by-frame in a predetermined location in the optical axis of the printing mechanism, the full realization of image alignment rests with the original element and the way in which it is positioned at the printing gate.

Registration of individual pieces of original sheet material is conventionally performed by manual assistance or by involved transport apparatus. Manual registration, however, is unsuitable for reasons of poor productivity and labor expense. Automatic transport apparatus typically involves conveying systems that operate in two dimensions — one to move the material into the gate until stopped and another to force the material transversely into an aligning position. Such an automatic apparatus is complex and usually of large size thereby taking up a large floor area.

An example of another type of transport apparatus is DE AS 1,116,601 which relates to a gravity-transport for distributing, sorting and stacking of letters or the like. Such transport devices are often used to move letters over a long distance, for example from one story of a building to another, and are designed to receive each letter in a free fall position. In order to slow down gravity accelerated movement of a letter, the known transport is curved so that the slope of the track decreases from top to bottom. In addition, corrugations are placed transverse to the direction of movement to slow the letter and to urge the letter into abutment with stop 5.

The problem solved by the present invention differs from that of such known stacking apparatus in that the present apparatus will efficiently handle a large number of single originals to accurately and repetitively position originals in a printing station for photographic exposure. This is accomplished by a transport apparatus which comprises a straight, inclined track which has two guide surfaces inclined in two orthogonal directions.

The apparatus of DE AS 1,116,601 is not designed to reliably and precisely control the accurate and repetitive positioning of single originals in a printing station. The inability of such a transport device to control accurate positioning of a single original is obvious when the design of the known apparatus is examined in detail. For example, in the known apparatus;

1) Letters are dropped into the transport device in a free fall condition and transported over a long distance.

2) The transport device includes corrugations to slow down the letters and urge their alignment against stop 5.

3) Letters are dropped off the bottom edge of the transport device to a stack 8. Impact of each letter would tend to disrupt the previous positioned letter.

4) The transport device is likely to cause the letters to rotate, skew or even flip over completely as a result of their free fall or when they abruptly contact the numerous corrugations in the transport device.

It is obvious that a person skilled in the art faced with the problem of registration for photographic printing would not use the above features.

## Summary of the Invention

The present invention is intended to provide a transport apparatus which assures that an original is precisely aligned in the printing station of a photographic printer by the cooperative effect of a pair of guide surfaces and gravitational force acting on the moving original.

The invention provides means for supporting and guiding a sheet-like original along one each of its faces and edges while the original moves to the printing station. On the support means are guide surfaces which underlie the face and abut the edge of the original. The guide surfaces are inclined with respect to horizontal such that gravitational force is utilized to direct the face and edge of the original into contact with the respective guide surfaces. Importantly, the guide surfaces form first and second intersecting planes each located by an acute angle with respect to horizontal. This orientation generates a resultant force provided by the combination of gravitational force and frictional resistance of the guide surfaces which induces the original to slide along the support means. In an embodiment of the invention means cooperative with the support means expose the light-sensitive material to the original at a predetermined position in its gravitationally induced movement on the support means. Registration means are disposed adjacent the predetermined exposure position at the printing station to abut the element and interrupt its further movement. The predetermined position is so disposed that gravitational force bears upon the face and edge of each original and induces successive originals into aligned association with the guiding surfaces which form boundary edges limiting the further movement.

In a further embodiment of the invention, the sliding movement of the original is interrupted a predetermined distance from the printing station by at least one buffer station such that a predetermined sliding distance is established between the point of interruption and the printing station. By at least momentarily stopping movement of the original, a predetermined acceleration will result before the released original strikes the registration means. This feature isolates the gravitationally induced transport of the original from transient velocity and motion caused by unpredictable variations in the way in which the operator places the original into the transport apparatus.

The invention is described in detail below with reference to drawings which illustrate several embodiments, in which:

Figure 1 is a perspective view showing a preferred embodiment of the gravity transport;

Figures 2 and 3 are two views of the transport taken along lines 2—2 and 3—3 respectively of Figure 1 and showing angular position of the transport relative to the horizontal;

Figure 4 is a diagrammatic representation of another embodiment of the transport apparatus;

Figure 5 is a diagrammatic representation of a part of the apparatus according to Figure 4 with flat guide elements;

Figure 6 is a diagrammatic representation of a part of the apparatus according to Figure 5 with roller-shaped guide elements;

Figures 7A and 7B represent a preferred flow diagram of logic control for use with the gravity transport; and

Figure 8 is a partly perspective and partly block diagram illustrating printer components operable with and in response to the gravity transport.

## Description of the Preferred Embodiment

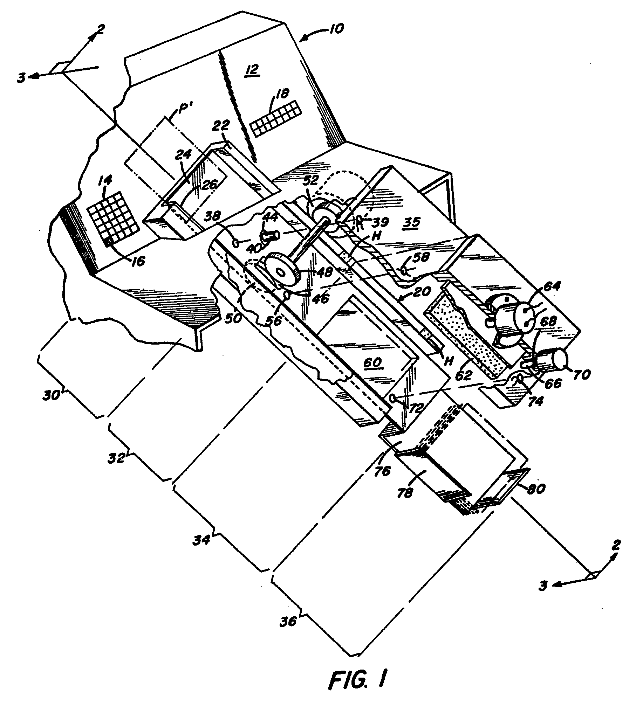

Figure 1 shows a photographic printer generally designated by the reference numeral 10 in partially cut away form. An operator control panel 12 spans the face of the printer and includes a group of control buttons 14, including a feed key 16, for energizing and directing the operation of the apparatus. An operator sits facing the control panel 12 and within easy reach of the control buttons 14 and the print transport about to be described. A display panel 18 is mounted on the control panel 12 for displaying order information keyed into the printer by the operator.

The cut away portion of the printer 10 is such as to expose the full length of a print transport apparatus generally referred to hereinafter as a gravity print transport and described by the reference numeral 20. A channel-shaped track 22 forms the body of the gravity print transport 20. Particular attention is paid to two surfaces of the track 22; one surface 24 functions as a planar guide bed for transporting print P′, shown in broken lines. Another surface 26 serves as a planar edge guide for the print P′ while the guide bed surface 24 is supporting and guiding one face of the print. Although a print is specifically illustrated, the material supported and guided by the surface 24 and 26 may be more generally considered any original bearing indicia of the desired image, e.g. non-transparent originals, framed slides or negatives or the like.

Each of the surfaces 24 and 26 is highly polished; for that reason it is preferable to coat the track 22 along surfaces 24 and 26 with stainless steel, chrome plated brass, or similar material that is receptive to a highly polished surface. The guide surfaces 24 and 26 preferably define planes that orthogonally intersect each other although deviations from orthogonality may be tolerated. Similarly the planes may fail to intersect as long as the thickness of the original is greater than the free space created between the edge and face guides at their point of closest contact, i.e., the point nearest to intersection.

For ease of discussion, the gravity print transport is functionally divided into four sections: feed section 30, a metering section 32, an exposure section 34 and a collection section 36. Each section is bracketed accordingly in Figure 1. A cover 35 is hinged to the track 22 and overlies portions of the feed section 30, the metering section 32 and the exposure section 34. The cover 35 is shown spaced from the transport 20 in Figure 1 for clarity of illustration; in use the cover 35 is fastened to one side of the transport 20 by hinges H. The sides of the channel-shaped track 22 form rails for supporting the cover 35 when in its closed position so that sufficient space exists between the guide bed 24 and the cover 35 for the print P' to pass freely between.

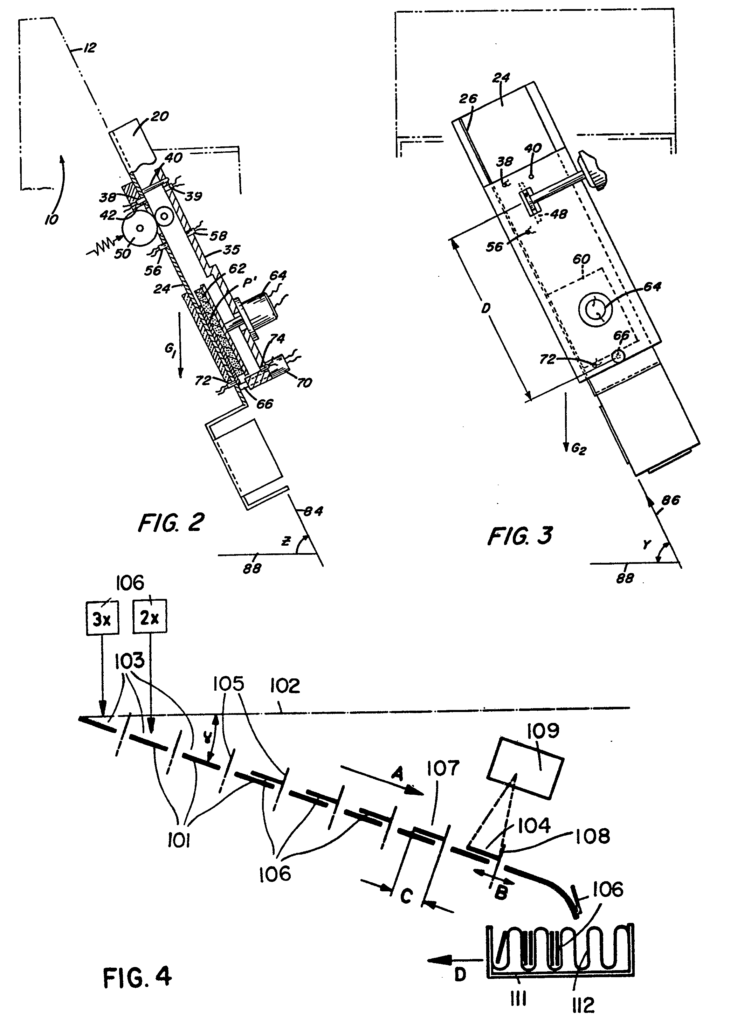

The feed section 30 projects from the interior portion of the printer 10 so that the operator may readily insert the print P' into the gravity print transport 20. A light emitter 38 is mounted at one end of the feed section 30 for engagement with the print P' when it is fully positioned in the feed section 30 against an entrance pin 40. An entrance detector 39 is mounted directly opposite the light emitter 38 on the cover 35. The pin 40 connects to an air cylinder 42 (as best seen in Figure 2) and freely projects through an opening 44 in the guide bed surface 24.

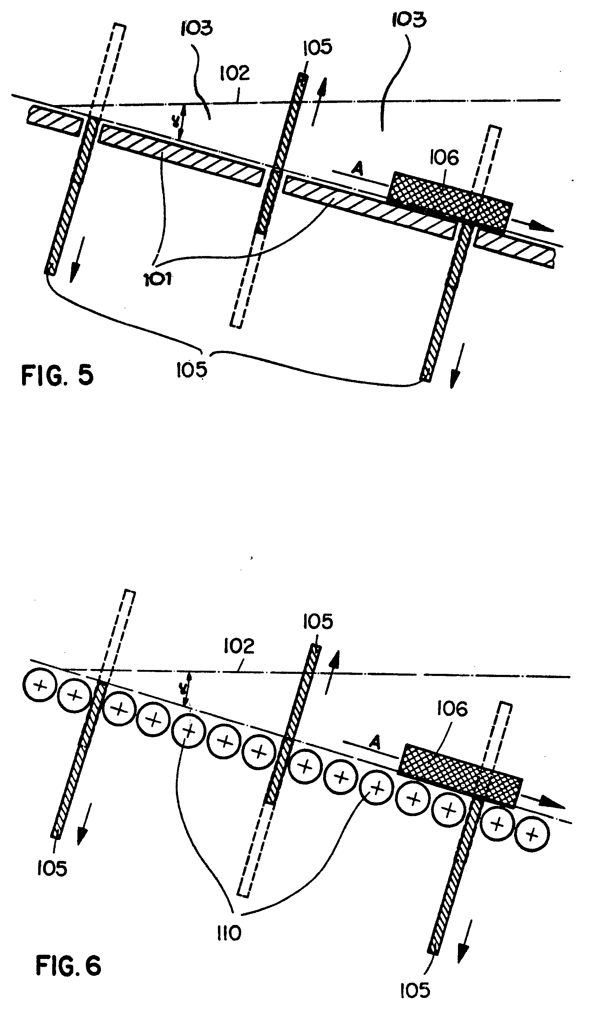

In the metering section 32, there is another opening 46 for permitting a metering drive roller 48 to engage a pinch roller 50 with the nip therebetween being substantially in a plane of the guide bed 24. The drive roller 48 is mounted for rotation on a motor 52. A metering disk — which will be described later in connection with Figure 5 — is driven from the pressure roller 50 for determining the length of the print P'. A second light emitter 56 is located on the guide bed 24 just beyond the nip of the metering roller-pinch roller combination. Directly opposite the light beam of emitter 56, on the cover 35, is a leading edge detector 58.

Turning now to the exposure section 34 of the gravity print transport 20, a transparent glass platen 60 is inset into an opening in the guide bed 24 such that the surface of the platen 60 is substantially co-planar with the guide bed 24. Situated opposite the platen 60 on the cover 35 is a pressure plate or clamping pad 62 pneumatically operable by an air cylinder 64. An exit pin 66 freely protrudes through an opening 68 in the cover 35 for reciprocal movement by an air cylinder 70. A third light emitter 72 is located between the exit pin 66 and the glass platen 60. Opposite the emitter 72, on the cover 35, is a print gate detector 74 for indicating the presence of the print P' against the exit pin 66. Each of the detectors 39, 58 and 74 may be a conventional photosensor. Finally, the collection section 36 includes a collection tray 76 having sides 78 and 80 for supporting a stack of prints (shown in phantom lines) without interfering with the prior operation of the gravity print transport 20.

It was found that a print transport is simplified, but remains significantly effective, if gravity is permitted to influence the movement of the print. However, several constraints affect the use of gravitational force. The fall or slide of the print must be controllably guided and, importantly, the print must finally settle into a precise position not only disposed for correct exposure but capable of repeated replication. These requirements must be met without putting artificial constraints on the activity of the operator, i.e., without requiring that the print be shoved into the feed section 30 at a particular angle or velocity, etc. In addition, the transport must accommodate various sizes of prints with various degrees of paper curl. Although undesirable, paper curl is sometimes present in customer returned prints and must not cause the machine to jam or otherwise malfunction. The proper combination of gravitational force and guidance was empirically found to depend on tilting the print transport 20 in two substantially orthogonal directions, both sloped away from a horizontal direction with a substantial vertical bearing.

The requisite tilt is shown in the elevation views of Figures 2 and 3. The printer 10 is shown situated with respect to a horizontal reference plane indicated by marker 88. Referring now to Figure 2, the bed 24 is positioned adjacent a first inclined reference plane indicated by a directional marker 84 such that a slope angle Z is formed between the marker 84, and therefore the bed 24, and the horizontal marker 88. The slope angle Z has a substantial vertical bearing and contributes a component of gravitational force $G_1$ that causes the print P' to bear against the highly polished guide bed surface 24. But this single component is insufficient for repeatable guidance of the print to the exposure section 34 and against the exit pin 66. Referring next of Figure 3, the inclined edge guide 26 is further positioned adjacent a second inclined reference plane indicated by another marker 86 such that a slope angle Y is formed between the marker 86, and therefore the edge guide 26, and the horizontal marker 88. The slope angle Y also has a substantial vertical bearing and contributes a second component of gravitational force $G_2$ that causes the print P' to bear against the highly polished edge guide surface 26. The combination of the gravitational forces $G_1$ and $G_2$ form a resultant force that induces the print to slide along both surfaces simultaneously until interrupted by the exit pin 66 where the print is registered in position for exposure.

Figures 2 and 3 describe one way of providing proper tilt for the gravity print transport 20. Alternatively, but consistent with the slope angle description, the transport 20 can be so tilted in a compound angle that components of gravitational force cause the print to bear against both the planar guide bed 24 and the planar edge guide 26. Slope angles Y and Z are also angles defined within planes formed from the mutually horizontal marker 88 to the slope markers 84, 86, respectively, and, as thus defined the angles form a locus of points in mutually orthogonal intersecting planes each located by an acute angle with respect to the horizontal. However described, the compound angular incline of the gravity feed transport 20 can be resolved into two slope angles, Y and Z forming an angle of at least 20° and preferably of 35° to 80° with the horizontal. Reliable operation has been experienced with the Y slope is between 75° and 55° and the Z slope is between 80° and 60°. However, these angular ranges are not intended as limitations since the concept of the invention is useful with any combination of angles as long as the components of gravitational force are sufficient to cause the print to simultaneously bear against both guide surfaces.

The provision of slope angles Y and Z assure gravitationally-induced transport of original material, such as the print, in the copier or printer. While gravitationally induced alignment of the original is provided by such design, additional control is obtained if the distance of gravitationally-induced sliding is predetermined. The entrance pin 40, already included upstream from the exposure section 34 for restraining the print subject to machine timing and throughput requirements, also causes the print P' to completely decelerate after being inserted into the feed section 30 by the operator. In the present embodiment, after the print P' is released from the pin 40 the combination of the metering roller 48 and the pinch roller 50 again overrides the effect of gravity while the print is engaged in their nip. Either the pin 40 or the rollers 48 and 50 may be considered as defining a location on the gravity print transport at which the print P' is restrained from gravitationally induced movement.

In the presently preferred embodiment, the rollers 48 and 50 divide the gravity print transport path into two overall sections: a receiving section preceding the rollers and a transporting section following the rollers. The transporting section of the path includes a free-sliding distance D defined between the nip of the rollers 48 and 50 and the exit pin 66 (Fig. 3). Given an original of a particular length, the existence of a gravitational free-sliding distance has the advantage of providing a known acceleration such that the original strikes the pin with a substantially predetermined velocity and force dependent only upon its mass. Variations in the force and direction of operator placement of the original are therefore isolated from the gravity-guided transport of the original and have no effect on its alignment. Although provided by rollers 48 and 50 in this embodiment, the feature of predetermining the gravitational forces acting on the original can be provided by the entrance pin 40 if the length determination provided by the metering roller, and the rollers themselves, are eliminated. If the distance D and the transporting section of the path are determined from the entrance pin 40, the original may be released for gravitationally induced transport dependent upon the presence of the original in the loading section 30 as sensed by the photocell 38.

Another embodiment of the invention is to have a plurality of buffer stations 103, Figure 4 arranged in front on the printing station whereby the original print 106 is limited in the direction of movement by abutment elements 105 which can be moved in and out. Furthermore, the gravity print transport may consist of flat guide elements 101 all lying in one plane and defining an angle of at least 20° with the horizontal 102. In this way, an isolated plane is produced which slopes from the uppermost buffer station 103 to the printing station 104 so that the original when placed in the buffer station 103 automatically slides by its own weight along the inclined plane in the direction of the arrow A.

The abutment elements 105 divide the original buffer into a number of buffer stations 103 into which the originals 106 may be placed at various intervals whereas printing of the originals 106 takes place according to the cycle of operations of the printing unit 109 placed at the end of the buffer.

In the illustrated embodiment of Figure 4, the original print 106 is measured as to its length and width by photocells located in the print-measuring station 107. The abutment elements 105 of the print-measuring station 107 serve as an aligning edge for measuring the length C of originals 106. To measure the width lateral boundary layers (not shown) of the buffer station 103 are made use of, the guide elements 101 forming an inclined plane having an inclination of at least 20° transversely to said plane in addition to the aforementioned inclination towards the printing station 104 in the manner previously discussed. Because of the combination of gravitational forces, all inserted originals 106 move along the guide elements 101 arranged on the inclined plane and during their movement are laterally supported by further guide elements not shown in Figure 4 which form boundary edges limiting the transverse slope. In this way, each original 106 located in the print-measuring station 107 and the printing station 104 automatically assume a position in which it is aligned with respect to two edges and one face. This permits originals of different sizes to be measured immediately without additional alignment. Because of this unique arrangement of the gravity print transport, an original does not remain longer in the print-measuring station 107 that in the other buffer stations 103 so that the printing rate is determined by the cycle of the operations of the printing unit 109 and the printing station 104 respectively. Furthermore, the value obtained from measuring the print also serves to control a movable abutment element 108 both in and out and in the direction of the gravity print transport (direction of arrow B). This element serves to align an original print 106 in the printing station 104 with respect to the printing unit 109.

The guide elements 101 as well as the lateral guide elements not illustrated are designed as plane, straight and immovable surfaces, on which the originals 106 are supported and slide in a flat position, as shown in particular in Figure 5. The abutment elements 105 of the buffer stations 103 are moved by electro-magnets not shown to assume their operative and inoperative positions respectively (the latter being illustrated in dash-dotted lines).

In accordance with the embodiment shown in Fig. 6, the guide elements are designed as freely rotatable rollers 110 on which the originals are supported and slide in a flat position.

A combination of flat guide elements 101 and freely rotatable rollers 110 is also conceivable as is an uneven, for example, corrugated surface configuration of the flat guide elements 101 and the lateral guide elements respectively.

After printing, the originals 106 are allowed by the withdrawal of the abutment element 108 to slide in the direction of the arrow A out of the printing station 104 and to drop into an order collecting tray 111 having compartments 112. All originals pertaining to one order as well as associated items such as order envelope, punched card or invoice which were transported along a path drop into one compartment of the tray 111.

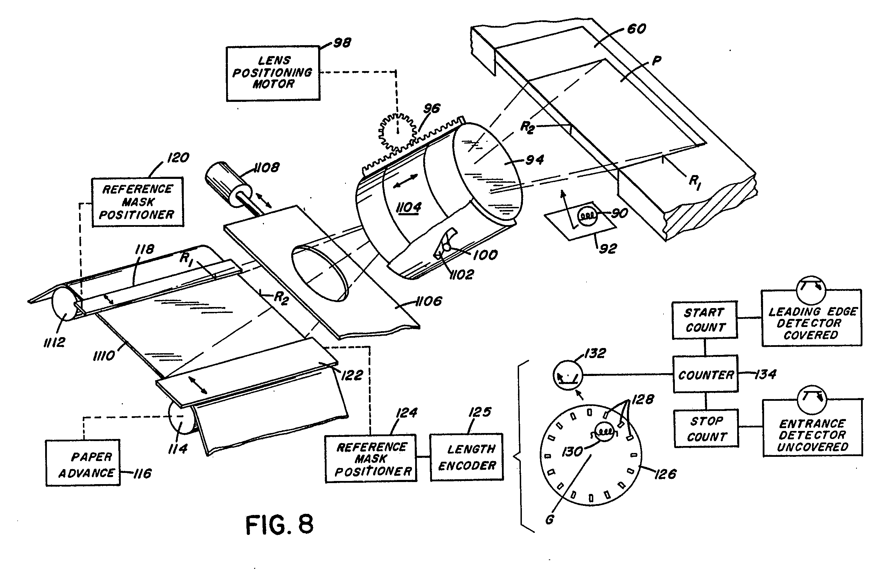

Referring now to Figure 8, apparatus is illustrated for cooperation with the gravity print transport 20, (Figure 1) particularly for exposing light sensitive paper to a photographic print. A portion of the exposure section 34 is reproduced to show a print P lying atop the glass platen 60. A lamp 90 is located nearby the print P and, when energized, emits light that reflects off one or more mirrors 92 and against the platen 60 to illuminate the print P. The lamp 90 is sufficiently baffled to prevent stray illumination from reaching the light sensitive portion of the printer. A compound lens 94 is provided for axial movement by a rack and pinion drive 96 connected to a lens positioning motor 98. This axial movement provides variable magnification. Furthermore, to provide a zoom effect, several elements of the lens 94 are moved axially relative to each other by provision of a cam follower 100 moving with respect to a fixed camming slot 1102 when the positioning motor 98 adjusts the axial position of the lens 94. The follower 100 is mounted on a slide 1104 that controls internal gears for moving individual elements of the compound lens 94.

A movable shutter 1106, controlled by air cylinder 1108, and in reciprocating connection therewith, is located between the lens and the image plane. At the image plane there is located a span of photographic, light-sensitive paper 1110 stretched between a guide roller 1112 and a drive roller 114. An additional mirror (not shown) may be used in the optical path to produce a correct reading image on the image plane. The movement of the paper is regulated by a paper advance 116 which is also coordinated with a printer (not shown) for putting markings on the paper web to key a subsequent operation. Two movable masks are illustrated adjacent the span 1110 of paper: a first reference mask 118 (controlled by a positioner 120) and a second reference mask 122 (controlled by positioner 124). Both masks function to limit the area of exposure on the span 1110 of paper.

The apparatus is further intended for handling different length prints. The mask 122 therefore is precisely moved to block out the correspondingly magnified image of the original print P of predetermined length. The process of predetermining the length is achieved by a length encoder 125. The encoding operation includes an encoder disk 126 adapted for rotation and having a plurality of spaced apertures 128 on the circumference edge thereof. A lamp 130 is appropriately located to shine a beam of light through the aperture 128 to a photosensor 132 which is connected to a counter 134 for determining the number of apertures 128 that pass between the lamp 130 and the photosensor 132 during a given period. The appropriate period is chosen by starting and stopping the counter 134 in conjunction with the leading edge detector 58 and the entrance detector 39, respectively.

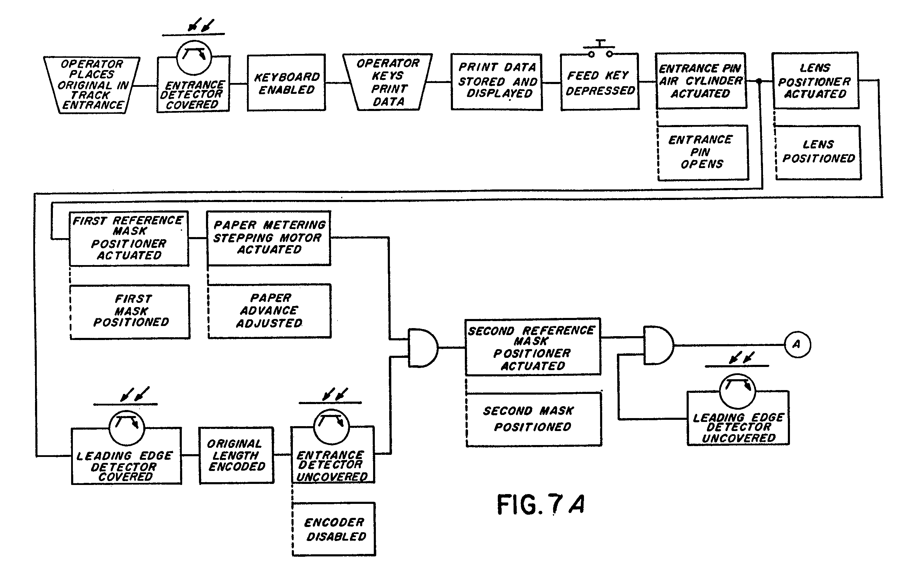

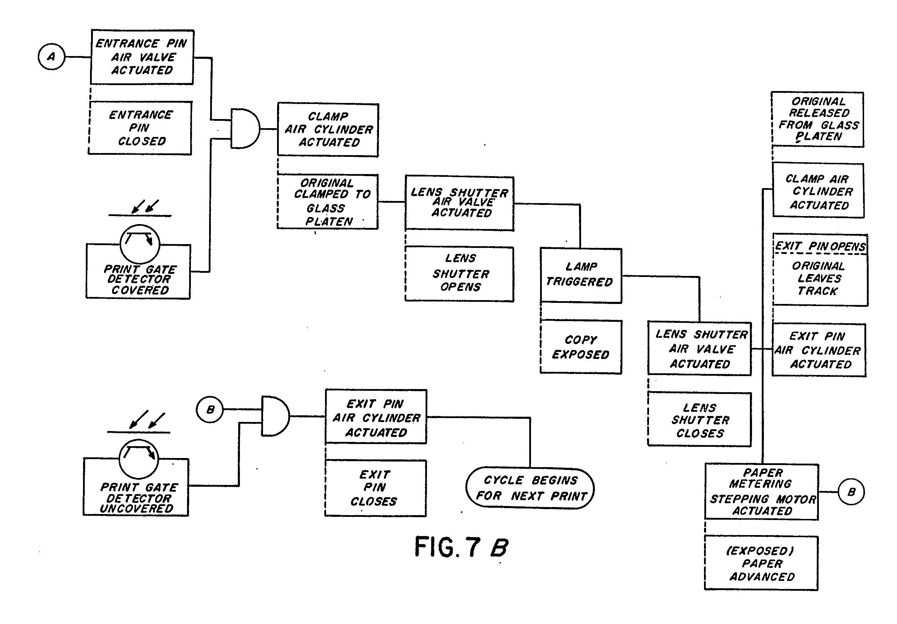

Figures 7A and 7B are program flow diagrams useful in describing the operation of the gravity print transport illustrated in Figures 1, 2 and 3 particularly with other components of the printer 10. In practice, the operational steps of the printer will be under the logic control of a computing facility, such as that provided by a microprocessor. Since the flow diagrams of Figures 7A and B stand alone as a description of the operation, only the salient points will be highlighted. Referring to the structure of Figure 1 in conjunction with the flow diagram, the sequence begins when the operator deposits a print in the feed section 30 of the gravity print transport 20. Due to the orientation of the transport 20 with respect to the horizontal marker 88 (Figures 2 and 3), the print — due to gravitational force — engages the guide bed surface 24 and the edge guide surface 26. The high polish on these surfaces minimizes frictional drag and enhances trouble-free slippage over their surfaces. Furthermore, the orientation of the transport 20 is such that the print may be deposited vertically at any angle by the operator and gravity will induce the rest of the guidance.

After receiving the print, the surfaces 24 and 26 guide the print to a position against the entrance pin 40 and covering the entrance detector 39. The consequent break in the light beam triggers internal logic that activates keyboard 14, in particular the feed key 16. By depressing the feed key 16, the operator signals that a print is ready for copying. If the machine is prepared to process the print through the transport 20, the entrance pin 40 is withdrawn into the aperture 44 so that the print may pass thereover under the influence of gravity. Then the print proceeds into the nip between the metering drive roller 48 and the pinch roller 50. As the leading edge of the print leaves the nip, the leading edge detector 58 is covered and the length encoding sequence is initiated.

Diagrammatically shown in Figure 8, the length encoding operation consists of counting the number of apertures 128 that pass a given position during a given time. The count is begun — by activating the counter 134 — when the light beam striking the leading edge detector 58 is broken by the leading edge of the print. Each passage of light between the lamp 130 and the photosensor 132 represents one count. The total number of counts is accumulated and interpreted by the length encoder 125 for adjusting the reference mask 122 accordingly and permitting the full length of the image to fall on the paper 1110. The encoding sequence is stopped when the entrance detector 39 is uncovered as the trailing edge of the print moves by and completes the light beam. Since the entrance detector 39 is a known distance from the leading edge detector 58, this distance is factored into the length determination.

While the length is being encoded, several operations occur dependent upon the information put into the machine through the keyboard 14. The lens positioner 98 (Fig. 8) adjusts the axial position of the entire lens assembly 94 to correspond to the particular format punched in by the operator. As the lens moves axially the follower 100 slides through the cam slot 1102 and forces an axial adjustment in the zoom ring 1104. This movement adjusts the position of one or more lens elements within the assembly 94 with respect to each other, making the lens 94 perform substantially as a zoom lens.

At about the same time, the leading edge detector 58 is uncovered as the trailing edge of the print slides by and completes the light beam. The entrance pin 40 is then allowed to close. The print continues momentarily along the transport until it encounters the exit pin 66. At this point the print is stopped and it is positioned abutting the edge guide surface 26. Importantly, the dual incline of the gravity print transport 20 causes the print to stop against the exit pin 66 in a precisely predetermined position with its edge; along the full length thereof, biased against the edge guide 26. What results is a precisely positioned print plane sufficiently defined by two linear reference positions, denoted by the markers $R_1$ and $R_2$ in Figure 8.

Since varying aspect ratios and magnifications must be accommodated by the exposure apparatus, it is possible to transfer only one linear reference position, that is $R_2$, to the same edge of the paper time and again. The other reference position $R_1$ is calculated by reference mask logic 120 and set by the variable reference mask 118. Since the logic knows where the linear reference positions always are in the print section 34 — due to the guidance features of the transport — and also knows the aspect ratio and magnification from instructions entered by the operator, the first reference mask 118 may be positioned before the print enters the printing section 34. Furthermore, from the same information, the paper advance 116 is adjusted and the lens 94 is positioned. Finally the second reference mask 122 is positioned based on data from the length encoder 125 and the degree of magnification provided by the lens 94.

Once the print is in the exposure position, the print gate detector 74 is covered by the print and the light beam thereto is broken. This signals the air cylinder 64 to drive the clamping pad 62 in close proximity to the glass platen 60 with the print therebetween. The depth of field in the optical system does not require the print to be pressed flat against the glass. With the print substantially clamped against the glass platen 60, the object to be reproduced is assuredly in the exposure plane. Then, in proper sequence, the shutter 1106 opens, the lamp 90 energizes, exposure is made onto the paper 1110 and the shutter 1106 closes. The air cylinder 64 deenergizes and the pad 62 releases from the platen 60, freezing the print. The exit pin 66 then retracts into the aperture 68 and permits the print to pass thereunder until it leaves the guide surface 24 and drops into the collection tray 76. The print gate detector 74 is uncovered as the light beam again strikes it, causing the exit pin 66 to close and the apparatus is ready for the next print.

The original material may have borders or it may be borderless. The exposed image on the span 1110 of photosensitive paper is typically borderless. For a borderless original the process of copying may be substantially as described and illustrated in connection with Figure 8. In the case of bordered originals, the operator enters an appropriate border code through the keyboard 14 when prints of a given border are being run through the machine. The logic of the printer is responsive to this entry and the lens positioning motor 98 correspondingly adjusts the magnification of the lens 94 to bring the edge of the print to the edge of the paper — yielding a borderless exposure. In addition, the mask positioners 120 and 124 correspondingly adjust for the bordered print.

It is to be noted that each of the reference mask positioners 120 and 124 is controlled by the size of the borders (if any) on the original and also by the desired amount of image spillover. The image is said to spill over when it is slightly larger than the corresponding paper area. Spillover is advantageous when there are unavoidable variations in the mechanical and optical system which cause the position of the image to shift slightly from print to print. In addition, the length encoder 125 and the magnification of lens 94 also control the reference mask positioner 124. Further the position of reference mask 118 figures into the position of reference mask 122.

It is to be understood that the logic and flow diagrams of Figures 7A and 7B are simplified to show salient logic features only. Other functions are understood. For example, cross checks and interlocks are usual in such logic to insure that one print is completely processed before another is permitted to advance beyond the entrance pin 40. Also, facility may be provided for cycling through exposures of a print several times if multiple copies are desired, identifying a customer order and associating the copies therewith, etc. Suitable discharging apparatus for directing air along the guiding surfaces of the gravity transport is helpful in controlling dust. Furthermore, by ionizing the air discharge in conventional ionizing apparatus static buildup is controlled.

The original material transported under influence of gravity has been described, by way of preferred example, as a photographic print. Though such an original is typically a non-transparent positive, transparencies or negatives may also be handled in this manner. Since the apparatus is useful generally with a copier, the original may also be any material possessing sufficient stiffness to adapt to the guidance offered by the polished guiding surfaces and gravity.

## Claims

1. A gravity-impelled transport apparatus for aligning an original (P') in a predetermined position in a printing station (34; 104) comprising a buffer station (30; 103) spaced from said printing station and a track (22) extending between the buffer station and the printing station, said track being inclined with respect to the horizontal whereby gravitational force directs the face and edge of said original into contact with said track characterized in that said track (22) is straight and includes first and second guide surfaces (24, 26) inclined in two orthogonal directions each located by an acute angle with respect to a horizontal plane whereby first and second components ($G_1$, $G_2$) of gravitational force direct the face and edge of said original (P') respectively into contact with said first and second guide surfaces (24, 26) and a third component of gravitational force induces the original (P') to move toward said predetermined position (34, 104) in contact with said guide surfaces (24, 26); and registration means (66, 108) is disposed adjacent the printing station to abut the original in the predetermined position.

2. An apparatus as claimed in Claim 1 characterized in that said transport apparatus (20) has an elongate feed section (30) terminating at a restraining location and an elongate metering section (32) extending to a printing station; and abutment means (40) positioned proximate said feed section for releasably restraining the original; and means (42) for actuating said abutment means (40) to release the original to permit gravitational force to induce sliding movement of the original along the length of the metering section (32).

3. An apparatus as claimed in Claims 1 and 2 characterized in that means (38, 39) are provided for sensing the presence of the original at the feed section, and actuating means (42) including means responsive to the sensing of the original by said sensing means for releasing the original whereby gravitational force induces the original to slide along the length of the metering section (32).

4. An apparatus as claimed in Claims 1 to 3 characterized in that metering means (48, 50, 56, 58) are provided for sensing the length of the original (P') in the metering section (32).

5. An apparatus as claimed in Claims 1 to 4 characterized in that said first and second guide surfaces (24, 26) are planar for supporting and guiding the face and edge of the original respectively and said first and second planar surfaces (24, 26) are substantially at right angles to each other.

6. An apparatus as claimed in Claims 1 to 5 characterized in that said first and second surfaces form an angle of at least 20°, preferably 35° to 80° and most preferably 55° to 70° with the horizontal (88, 102) to cause the original to slide by gravity, with the face and edge in engagement with said surfaces (24, 26) from the feed section (30) to the printing station (34, 104).

7. An apparatus as claimed in Claims 1 to 6 characterized in that a plurality of buffer stations (30, 103) are spaced from said printing station (34, 104).

8. An apparatus as claimed in Claims 1 to 7 characterized in that at least one of the guide surfaces is defined by flat plates (101) all lying in one plane on which the originals are supported in a flat position.

9. An apparatus as claimed in Claims 1 to 4 characterized in that at least one of the guide surfaces are defined by rollers (110) mounted so as to be freely rotatable and/or by uneven immovable surfaces.

## Revendications

1. Un appareil de transport à impulsion par gravité pour centrer un original (P') dans une position choisie à l'avance dans un poste de tirage (34, 104) comprenant un poste d'attente (30, 103) espacé du dit poste de tirage et une voie (22) s'étendant du poste d'attente au poste de tirage, cette voie étant inclinée sur l'horizontale de manière que la force de gravitation applique la face et l'arête du dit original contre cette voie, caractérisé en ce que cette voie (22) est rectiligne et comprend une première et une seconde surfaces de guidage (24, 26) inclinées dans deux directions orthogonales chacune formant un angle aigu avec un plan horizontal de telle manière qu'une première et une seconde composantes ($G_1$, $G_2$) de la force de gravitation appliquent respectivement la face et l'arête du dit original (P') au contact de la dite première et la dite seconde surfaces de guidage (24, 26) et qu'une troisième composante de la force de gravitation entraîne l'original (P') à se mouvoir vers la dite position choisie à l'avance (34, 104) au contact des dites surfaces de guidage (24, 26), et un dispositif de mise en position (66, 108) adjacent au poste de tirage pour caler l'original dans la position choisie à l'avance.

2. Un appareil conforme à la revendication 1, caractérisé en ce que le dit appareil de transport (20) présente une section d'alimentation (30) allongée qui se termine à un premier emplacement de retenue et une section de mesure (32) allongée qui s'étend jusqu'au poste de tirage, et un dispositif de butée (40) placé à proximité de la dite section d'alimentation pour retenir momentanément l'original, et un dispositif (42) pour actionner le dit dispositif de butée (40) et libérer l'original pour permettre à la force de gravitation de provoquer le glissement de l'original sur toute la longeur de la section de mesure (32).

3. Un appareil conforme aux revendications 1 et 2, caractérisé en ce qu'il comprend un dispositif (38, 39) pour déceler la présence de l'original dans la section d'alimentation et un dispositif d'actionnement (42) comprenant des moyens qui réagissent à la détection de l'original par le dit dispositif de détection pour libérer l'original, grâce à quoi la force de gravitation provoque le glissement de l'original sur toute la longueur de la section de mesure (32).

4. Un appareil conforme aux revendications 1 à 3, caractérisé en ce qu'il comprend un dispositif de mesure (48, 50, 56, 58) pour mesurer la longeur de l'original (P') dans la section de mesure (32).

5. Un appareil conforme aux revendications 1 à 4, caractérisé en ce que les dites première et seconde surfaces de guidage (24, 26) sont planes pour supporter et guider respectivement la face et l'arête de l'original et les dites première et seconde surfaces planes (24, 26) sont pratiquement orthogonales entre elles.

6. Un appareil conforme aux revendications 1 à 5, caractérisé en ce que les dites première et seconde surfaces forment un angle d'au moins 20°, de préférence de 35° à 80° et encore plus préférablement de 55° à 70°, avec le plan horizontal (88, 102) pour faire glisser l'original par gravité, la face et l'arête au contact des dites surfaces (24, 26) de la section d'alimentation (30) au poste de tirage (34, 104).

7. Un appareil conforme aux revendications 1 à 6, caractérisé en ce que plusieurs postes d'attente (303, 103) sont espacés du dit poste de tirage (34, 104).

8. Un appareil conforme aux revendications 1 à 7, caractérisé en ce que l'une au moins des surfaces de guidage est définie par des plaques planes (101) toutes disposées dans un même plan sur lequel les originaux reposent à plat.

9. Un appareil conforme aux revendications 1 à 4, caractérisé en ce que l'une au moins des surfaces de guidage est définie par des rouleaux (110) montés de manière à tourner librement et ou par des surfaces fixes irrégulières.

## Patentansprüche

1. Durch Schwerkraft angetriebene Transportvorrichtung zum Ausrichten einer Vorlage (P') in einer vorbestimmten Lage in einer Kopierstation (34; 104) mit einer im Abstand von der Kopierstation angeordneten Pufferstation (30, 103) und einer sich zwischen Pufferstation und Kopierstation erstreckenden Bahn (22), die zur Horizontalen geneigt verläuft, derart, daß die Vorlage aufgrund der Schwerkraft mit ihrer Stirnseite und ihrer Kante mit der Bahn in Anlage gebracht wird, dadurch gekennzeichnet, daß die Bahn (22) geradlinig verläuft und eine erste und eine zweite Führungsfläche (24, 26) aufweist, die in zwei zueinander senkrechten Richtungen geneigt und jeweils in einem spitzen Winkel zu einer waagerechten Ebene so angeordnet sind, daß aufgrund einer ersten und einer zweiten Schwerkraftkomponente ($G_1$, $G_2$) die Vorlage (P') mit ihrer Stirnseite bzw. Kante mit der ersten bzw. zweiten Führungsfläche (24, 26) in Anlage gebracht wird und daß eine dritte Schwerkraftkomponente bewirkt, daß sich die Vorlage (P') auf die vorbestimmte Lage (34, 104) hin bewegt, in der sie an den Führungsflächen (24, 26) anliegt, und daß benachbart der Kopierstation Ausrichtmittel (66, 108) angeordnet sind, die die Vorlage in der vor-

bestimmten Lage zur Anlage bringen.

2. Vorrichtung nach Anspruch 1, dadurch gekennzeichnet, daß die Transportvorrichtung (20) einen langgestreckten, an einer Haltestellung endenden Zuführbereich (30) und einen langgestreckten, in eine Kopierstation reichenden Meßbereich (32), in der Nähe des Zuführbereichs angebrachte Anschlagmittel (40) zum lösbaren Halten der Vorlage sowie Mittel (42) aufweist, welche die Anschlagmittel (40) so betätigen, daß die Vorlage freigegeben wird und aufgrund der Schwerkraft entlang des Meßbereichs (32) gleiten kann.

3. Vorrichting nach Anspruch 1 und 2, dadurch gekennzeichnet, daß Abtastmittel (38, 39) zum Feststellen der Anwesenheit der Vorlage am Zuführbereich sowie Betätigungsmittel (42) vorgesehen sind, die Mittel enthalten, welche auf die Feststellung der Vorlage durch die Abtastmittel ansprechen und die Vorlage freigeben, damit diese aufgrund der Schwerkraft entlang des Meßbereichs (32) gleiten kann.

4. Vorrichtung nach den Ansprüchen 1 bis 3, dadurch gekennzeichnet, daß Zumeßmittel (48, 50, 56, 58) zum Abtasten der Länge der Vorlage (P') im Meßbereich (32) vorgesehen sind.

5. Vorrichtung nach den Ansprüchen 1 bis 4, dadurch gekennzeichnet, daß die erste und die zweite Führungsfläche (24, 26) zum Halten und Führen der Stirnseite bzw. Kante der Vorlage plan ausgebildet sind und daß die erste und die zweite plane Fläche (24, 26) in wesentlichen rechtwinklig zueinander verlaufen.

6. Vorrichtung nach den Ansprüchen 1 bis 5, dadurch gekennzeichnet, daß die erste und zweite Fläche einen Winkel von mindestens 20°, vorzugsweise von 35° bis 80°, am besten jedoch von 55° bis 70°, mit der Horizontalen (88, 102) bilden und so die Vorlage, mit ihrer Stirnseite und Kante an den Flächen (24, 26) anliegend, durch Schwerkraft von dem Zuführbereich (30) zu der Kopierstation (34, 104) gleiten lassen.

7. Vorrichtung nach den Ansprüchen 1 bis 6, dadurch gekennzeichnet, daß in einem Abstand von der Kopierstation (34, 104) mehrere Pufferstationen (30, 103) angeordnet sind.

8. Vorrichtung nach den Ansprüchen 1 bis 7, dadurch gekennzeichnet, daß mindestens eine der Führungsflächen von flachen Platten (101) gebildet wird, die alle in einer Ebene liegen, auf der die Vorlagen flach gelagert sind.

9. Vorrichtung nach den Ansprüchen 1 bis 4, dadurch gekennzeichnet, daß mindestens eine der Führungsflächen von frei drehbar gelagerten Rollen (110) und/oder unebenen, nicht bewegbaren Flächen gebildet wird.

FIG. 1

FIG. 2

FIG. 3

FIG. 4

FIG. 5

FIG. 6

3

OPERATOR PLACES ORIGINAL IN TRACK ENTRANCE

ENTRANCE DETECTOR COVERED

KEYBOARD ENABLED

OPERATOR KEYS PRINT DATA

PRINT DATA STORED AND DISPLAYED

FEED KEY DEPRESSED

ENTRANCE PIN AIR CYLINDER ACTUATED

ENTRANCE PIN OPENS

LENS POSITIONER ACTUATED

LENS POSITIONED

FIRST REFERENCE MASK POSITIONER ACTUATED

FIRST MASK POSITIONED

PAPER METERING STEPPING MOTOR ACTUATED

PAPER ADVANCE ADJUSTED

SECOND REFERENCE MASK POSITIONER ACTUATED

SECOND MASK POSITIONED

A

LEADING EDGE DETECTOR COVERED

ORIGINAL LENGTH ENCODED

ENTRANCE DETECTOR UNCOVERED

ENCODER DISABLED

LEADING EDGE DETECTOR UNCOVERED

FIG. 7 A

0 000 394

FIG. 7 B

0 000 394

FIG. 8